# EUROPEAN PATENT SPECIFICATION

(11) **EP 1 524 026 B1**
(45) Date of publication and mention of the grant of the patent: **23.01.2008**
(21) Application number: 04077775.7
(22) Date of filing: 06.10.2004
(51) Int. Cl.: B01D 63/10

(54) **Filter device for separating a particle-containing liquid into a concentrate and a permeate**
Filtervorrichtung zur Trennung einer teilchenhaltigen Flüssigkeit in ein Konzentrat und ein Permeat
Dispositif de filtre pour séparer un liquide contenant des particules en un concentrat et un perméat

(30) Priority: 16.10.2003 NL 1024557
(43) Date of publication of application: 20.04.2005
(73) Proprietor: Membracon Filtration B.V., 7216 PL Kring van Dorth (NL)
(72) Inventor: Tump, Jan, 7216 PL Kring van Dorth (NL)
(74) Representative: Dokter, Hendrik Daniel

(56) References cited:
- EP-A- 0 414 082
- US-A- 5 221 473
- US-A- 5 891 334

## Description

The invention relates to a filter device for separating a liquid for filtering having a first concentration of particles into a filtered liquid with a second, higher concentration of particles and a permeate, comprising a cylindrical housing and a cylindrical filter element which is received in axial direction in said housing and which is adapted at a first end surface to admit the liquid for filtering in axial direction and adapted at an opposite second end surface to discharge the filtered liquid in axial direction, the filter element being further provided with outlet means for the permeate, wherein the housing is provided with inlet means for admitting the liquid for filtering and outlet means for discharging the filtered liquid and the permeate, the housing being adapted to guide the filtered liquid in a space between the filter element and the housing in a direction opposed to the direction of the liquid for filtering through the filter element, wherein
the inlet means comprise an inlet chamber, a wall part of which is at least partially formed by the first end surface of the filter element, in addition to an inlet conduit debouching into this space,
the second end surface is in open communication with an outlet space extending at least between the outer surface of the filter element and the housing, and
the outlet means comprise an outlet opening in the outlet space placed distally relative to the second end surface. The filtered liquid with the second, higher concentration of particles is generally designated as the concentrate.

Such a filter device, wherein the filter element for instance comprises a membrane which is wrapped spirally round a central tube provided with openings, is known. This filter device is used for instance to filter electrophoresis lacquers.

It is known that, when left standing, electrophoresis lacquers have a strong tendency to sedimentation (settling). For this reason the cylindrical filter element is preferably placed vertically, wherein the housing of the filter element is provided on its underside with an inlet conduit for lacquer for filtering and is provided on its upper side with an outlet conduit for filtered lacquer and for clear permeate.

Known vertically placeable filter devices have the drawback that replacing the filter element is labour-intensive and heavy work. In such cases the inlet and outlet conduit must be disconnected from the conduits to which they are connected and the filter device, which may have a weight of about 35 kg, must be removed from its location using a hoisting device for reconditioning elsewhere. Removal of the filter element from the housing is often made more difficult per se in that the space between the outer surface of the filter element and the housing becomes filled over time with sediment from the liquid for filtering, and the filter element thus becomes caked onto the housing.

US-A-5 891 334 discloses a retaining ring assembly for a reverse osmosis filter cartridge, including a removable retaining ring inerted into the cartridge housing after insertion of the cartridge, the retaining ring including a demountable locking connection with the housing.

This filter device with a reverse osmosis filter is unsuited to filter for instance electrophoresis lacquers.

EP-A-0 414 082 relates to a cylindrical filterelement for reverse osmosis or ultra-filtration, which element is adapted in a cilindrical housing. An annular space between the filter element and the housing allows for guiding the filtered liquid in a direction opposed to the direction of the liquid for filtering through the filter element. The device is adapted for cleaning the annular space in either flow or counter flow direction.

Known from the European patent application EP-A-0647464 is a filter device wherein the filter element comprises a membrane filtration module, which is provided on its end surfaces with an annular sealing gasket sleeve. This prevents liquid for filtering entering the space between the outer surface of the filter element and the housing. Coupled in this filter device to the underside and upper side of the housing are an inlet and an outlet conduit respectively, at least one of which must be uncoupled when the filter element is changed. This filter device moreover has the inherent drawback that it requires a relatively large amount of space at the operational location as a result of the placing of inlet and outlet conduit on respectively the underside and upper side of the housing.

It is an object of the invention to provide a filter device which is operational for a relatively long period before it is necessary to replace the filter element.

It is a further object to provide a filter device wherein the filter element can be removed from the housing in simple and rapid manner without having to uncouple the inlet or outlet conduits from the housing.

A further object is a filter device which is compact and which takes up relatively little space at its operational location.

These objectives are achieved, and other advantages gained, with a filter device according to claim 1.

By guiding the filtered liquid in counterflow through the space between the filter element and the housing, lack of movement of the filtered liquid in this space, and thereby sedimentation, is prevented. As a consequence hereof the period between the placing of a new filter element and the necessary replacement thereof is lengthened considerably. Because the directions of flow of the liquid for filtering and the filtered liquid are opposed to each other, it is possible without problem to provide the inlet and outlet conduits on the same side of the housing, as a result of which a particularly compact and therefore space-saving filter device is obtained.

In a filter device according to the invention there is a gap present between the walls of the inlet space and the walls of the housing, whereby filtered liquid can be guided to an outlet conduit in a direction opposite to the direction of flow of the liquid for filtering, which outlet conduit can connect to an opening in a wall of the housing close to the inlet conduit from this housing.

In an advantageous embodiment the inlet space comprises a cylindrical space, an end surface of which is formed by the first end surface of the filter element.

This embodiment provides the advantage that it can be manufactured in simple manner and from relatively few components.

In yet another embodiment the housing is assembled from a holder part to which the filter element is releasably coupled and from which extend an inlet conduit for liquid for filtering and an outlet conduit for filtered liquid, and a cover part which can be coupled releasably to the holder part.

This embodiment provides the advantage that, when the filter element is replaced, only the cover part of the housing need be disconnected from the holder part, while the holder part need not be uncoupled from the inlet and outlet conduits coupled thereto, but can remain at its operational location.

In order to facilitate the removal of the cover part according to this latter embodiment, it is preferably provided with handles.

In a space-saving embodiment, the housing can be placed vertically and an inlet conduit for liquid for filtering and an outlet conduit for filtered liquid extend in the operational situation from the outer surface of the housing at a height close to the underside.

In a practical advantageous embodiment, the outlet means comprise an outlet conduit extending from the outlet opening, wherein this outlet conduit and the inlet conduit extend through the same end surface of the housing.

A filter device according to this embodiment is exceptionally compact, as a result of which it takes up relatively little space at its operational location.

In a subsequent space-saving embodiment, the housing can be placed vertically and an inlet conduit for liquid for filtering and an outlet conduit for filtered liquid extend in the operational situation from the underside of the housing.

In yet another space-saving embodiment, the housing can be placed vertically, an inlet conduit for liquid for filtering extends in the operational situation from the underside of the housing and an outlet conduit for filtered liquid extends from the outer surface of the housing.

In a preferred embodiment of a filter device according to the invention, wherein the housing can be placed vertically, the underside of the housing is formed by a support plate which extends to a position outside the periphery of the housing and which forms the underside of the housing of at least a second filter device according to the invention.

This latter embodiment provides the advantage that filter installations with large capacity can be assembled in simple manner by connecting in parallel a plurality of different filter modules, which are assembled per se from for instance one, two or more filters with a bottom plate (in the case of two or more filters a collective bottom plate).

The invention will be elucidated hereinbelow on the basis of exemplary embodiments and with reference to the drawings.

In the drawings:
Fig. 1 shows a schematic axial cross-section of a first embodiment of a filter device according to the invention,
Fig. 2 shows in a simplified axial cross-section a second embodiment of a filter device according to the invention,
Fig. 3 shows in a simplified axial cross-section a third embodiment of a filter device according to the invention,
Fig. 4 shows a simplified axial cross-section of a fourth embodiment of a filter device according to the invention for modular assembly, and
Fig. 5 shows a top view of a filter installation assembled from modules with the filter device shown in fig. 4.

Corresponding components are designated in the figures with the same reference numerals.

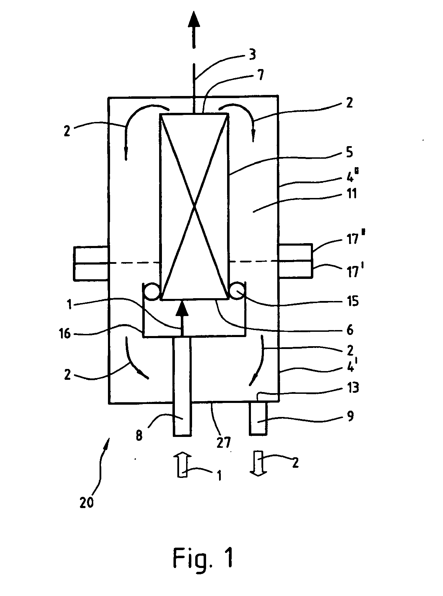

Fig. 1 shows a vertically placeable filter device 20 with a cylindrical housing 4', 4" and a cylindrical filter element 5, which is supported by an inlet chamber 16 which is arranged clear of the walls of housing 4', 4", wherein the upper side of inlet chamber 16 is formed by the lower end surface 6 of filter element 5, sealed by an O-ring 15. Housing 4', 4" is assembled from a holder part 4' and a cover part 4", which are coupled releasably to each other by means of flanges 17', 17". Filter element 5 is adapted on its lower end surface 6 to admit in axial direction a liquid for filtering (represented by arrow 1) and is adapted on its upper end surface 7 to discharge in axial direction filtered liquid (so-called concentrate, represented by arrows 2), and is further provided with outlet means for permeate (represented by arrow 3). Mounted in holder part 4' (in a manner not shown) is inlet chamber 16, from the underside of holder part 4' there extends an inlet conduit 8 debouching into inlet chamber 16. The upper end surface 7 is in open communication with an outlet space 11 between the outer surface of filter element 5 and housing 4", 4", in the bottom 27 there is arranged an outlet opening 13 to which is connected an outlet conduit 9. An outlet conduit for permeate 3 extends through cover part 4". In the shown configuration the direction of flow of the liquid for filtering 1 through filter element 5 is opposed to that of the concentrate 2 along the outside of filter element 5.

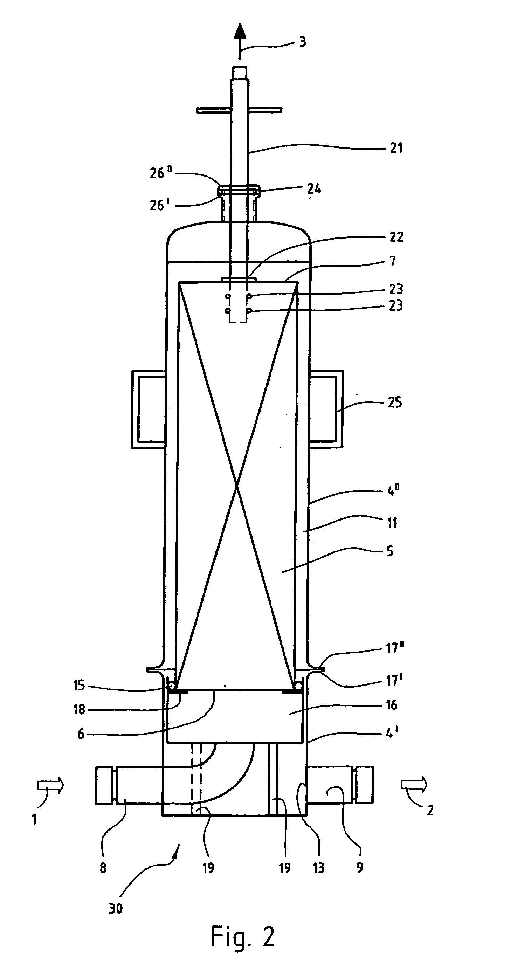

Fig. 2 shows a practical embodiment of a filter device 30 with a composite housing 4', 4" and a cylindrical filter element 5, which is supported by an inner peripheral edge 18 of an inlet chamber 16 which rests clear of the walls of housing 4', 4" on three legs 19, wherein the upper side of inlet chamber 16 is formed by the lower end surface 6 of filter element 5, sealed by an O-ring 15. Extending from the underside of the cylinder surface of holder part 4' is an inlet conduit 8 debouching into inlet chamber 16, in the cylinder surface there is arranged an outlet opening 13 to which an outlet conduit 9 is connected. Extending through cover part 4" is an outlet conduit 21 for permeate 3 which supports with a bumper 22 on the upper surface 7 of filter element 5, protrudes in a central permeate tube in filter element 5 in liquid-tight manner with two O-rings 23, and is sealed with a third O-ring 24 between flanges 26', 26" on the upper side of cover part 4". When filter element 5 is replaced, the permeate conduit 21 is first pulled out of filter element 5 and housing 4", whereafter flanges 17', 17" are uncoupled and cover part 4" can be lifted upward by the handles 25 arranged for this purpose. Filter element 5 is subsequently lifted off the edge 18 of inlet chamber 6, which can if desired also be taken out of holder part 4' for maintenance or cleaning.

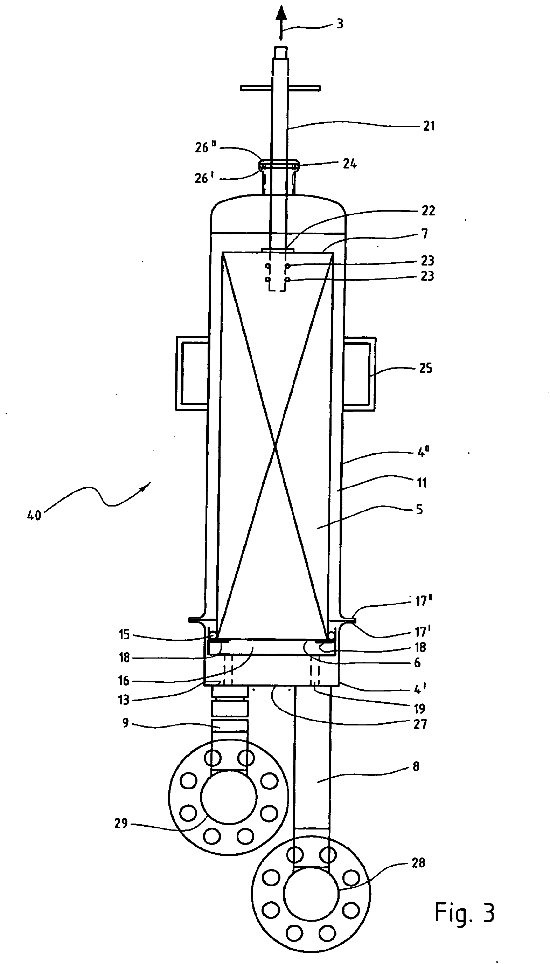

Fig. 3 shows a filter device 40 which differs from filter device 30 shown in fig. 2 in that inlet conduit 8 and outlet conduit 9 both extend downward from the bottom 27 of holder part 4' of the housing and debouch in respective collecting conduits 28, 29, to which a plurality of filter devices 40 can be connected in parallel.

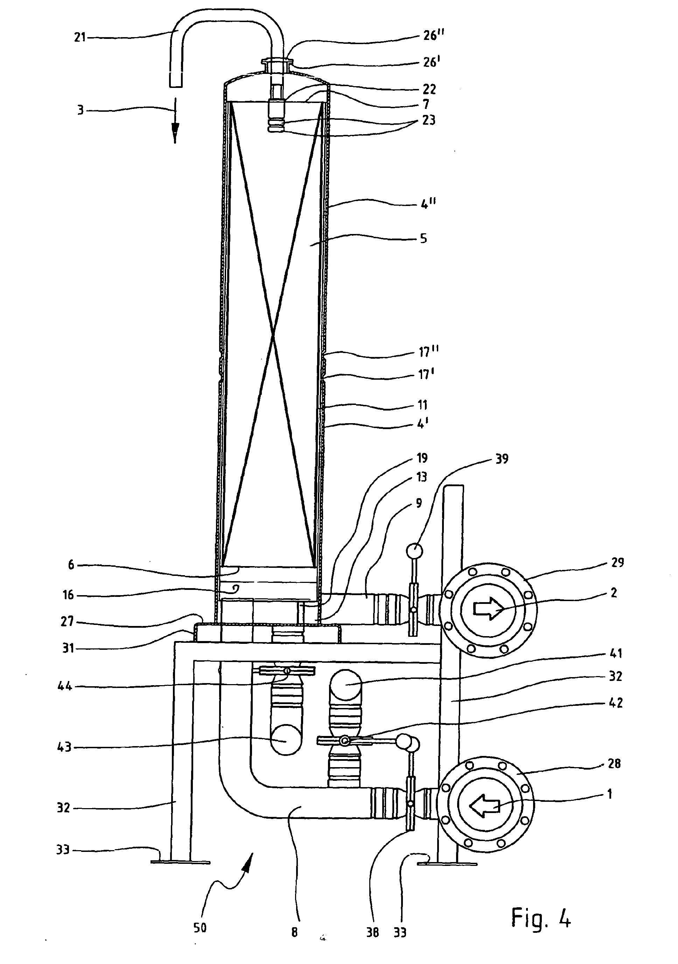

Fig. 4 shows a filter device 50 with a vertically placed housing 4', 4", wherein inlet conduit 8 extends from the underside 27 of housing 4', 4" and an outlet conduit 9 extends from the outer surface of housing 4', 4". The underside of housing 4', 4" is formed by a support plate 27, which rests with two bent edges 31 on a yoke 32 with foot supports 33, to which the collecting conduits 28, 29 are also attached. The figure further shows valves 38, 39 in respectively the inlet conduit 8 and outlet conduit 9, and a secondary inlet conduit 41 and a secondary outlet conduit 43, which are connected via respective valves 42, 44 to respectively the inlet conduit 8 and outlet conduit 9 for guiding a flushing liquid through filter device 50.

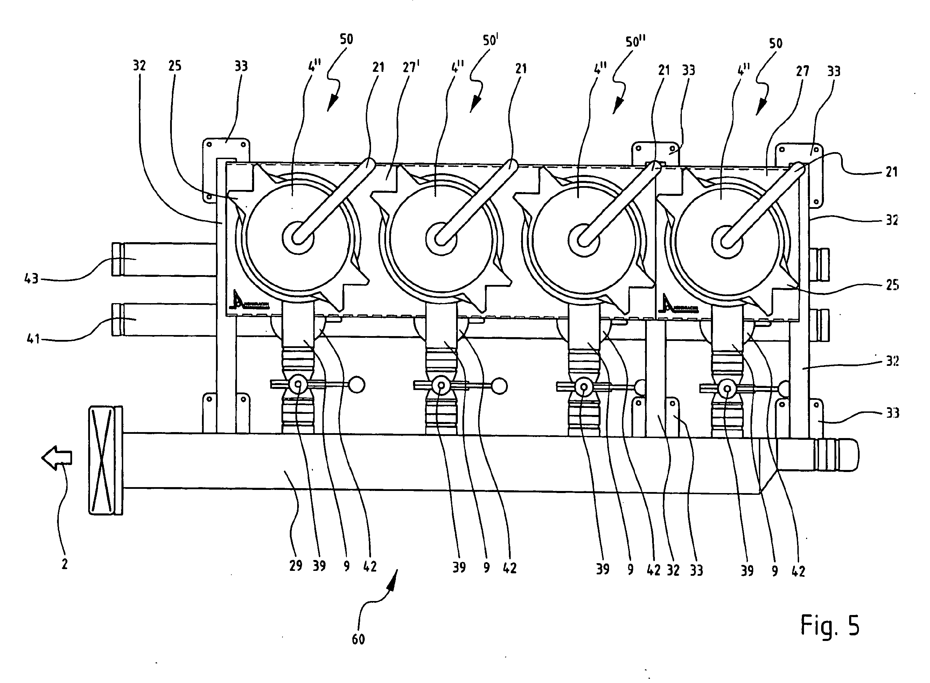

Fig. 5 shows a modular assembly of a filter installation 60 with four filter devices connected in parallel, wherein a first module (on the left in the figure) comprises three filter devices 50, 50', 50" on a collective support plate 27', and a second module (on the right in the figure) comprises one filter device 50 on a support plate 27.

It is noted that the inventive concept extends to filter devices with a composite housing, wherein an outlet conduit for concentrate extends through a bottom surface, and an inlet conduit for liquid for filtering extends through the outer surface of the housing, and to filter devices wherein the outlet conduit for the permeate extends on the same side of the housing as the inlet conduit for liquid for filtering or the outlet conduit for concentrate.

## Claims

1. Filter device (20, 30, 40, 50) for separating a liquid for filtering (1) having a first concentration of particles into a filtered liquid (2) with a second, higher concentration of particles and a permeate (3), comprising a cylindrical housing (4', 4") and a cylindrical filter element (5) which is received in axial direction in said housing (4', 4") and which is adapted at a first end surface (6) to admit the liquid for filtering (1) in axial direction and adapted at an opposite second end surface (7) to discharge the filtered liquid (2) in axial direction, the filter element (5) being further provided with outlet means (21) for the permeate (3), wherein the housing (4', 4") is provided with inlet means (8, 16) for admitting the liquid for filtering (1) and outlet means (9, 13) for discharging the filtered liquid (2) and the permeate (3), the housing (4', 4") being adapted to guide the filtered liquid (2) in a outlet space (11) between the filter element (5) and the housing (4', 4") in a direction opposed to the direction of the liquid for filtering (1) through the filter element, wherein
the inlet means comprise an inlet chamber (16), a wall part of which is at least partially formed by the first end surface (6) of the filter element (5), in addition to an inlet conduit (8) debouching into this chamber (16),
the second end surface (7) is in open communication with an outlet space (11) extending at least between the outer surface of the filter element (5) and the housing (4', 4"), and
the outlet means comprise an outlet opening (13) in the outlet space (11) placed distally relative to the second end surface (7), **characterized in that** the inlet chamber (16) is arranged clear of the cylinder surface and the end surfaces of the housing (4', 4").

2. Filter device (20, 30, 40, 50) as claimed in claim 1, **characterized in that** the inlet chamber comprises a cylindrical chamber (16).

3. Filter device (20, 30, 40, 50) as claimed in any of the claims 1-2, **characterized in that** the housing (4', 4") is assembled from a holder part (4') to which the filter element (5) is releasably coupled and from which extend an inlet conduit (8) for liquid for filtering (1) and an outlet conduit (9) for filtered liquid (2), and a cover part (4") which can be coupled releasably to the holder part.

4. Filter device (30, 40) as claimed in claim 3, **characterized in that** the cover part (4") is provided with handles (25).

5. Filter device (30) as claimed in any of the foregoing claims, **characterized in that** the housing (4', 4") can be placed vertically and an inlet conduit (8) for liquid for filtering (1) and an outlet conduit (9) for filtered liquid (2) extend in the operational situation from the outer surface of the housing (4', 4") at a height close to the underside (27).

6. Filter device (20, 30, 40) as claimed in any of the foregoing claims, **characterized in that** the outlet means comprise an outlet conduit (9) extending from the outlet opening (13), wherein said outlet conduit (9) and the inlet conduit (8) extend through the same end surface of the housing (4', 4").

7. Filter device (20, 40) as claimed in claim 6, **characterized in that** the housing (4', 4") can be placed vertically and an inlet conduit (8) for liquid for filtering (1) and an outlet conduit (9) for filtered liquid (2) extend in the operational situation from the underside (27) of the housing (4', 4").

8. Filter device (50) as claimed in any of the claims 1-5, **characterized in that** the housing (4', 4") can be placed vertically, an inlet conduit (8) for liquid for filtering (1) extends in the operational situation from the underside (27) of the housing (4', 4") and an outlet conduit (9) for filtered liquid (2) extends from the outer surface of the housing (4', 4").

9. Filter device (50) as claimed in any of the foregoing claims, wherein the housing (4', 4") can be placed vertically, **characterized in that** the underside (27', 27") of the housing (4', 4") is formed by a support plate which extends to a position outside the periphery of the housing (4', 4") and which forms the underside of the housing (4', 4") of at least a second filter device (50') as claimed in any of the foregoing claims.

## Patentansprüche

1. Filtervorrichtung (20, 30, 40, 50) zum Trennen einer zu filtrierenden Flüssigkeit (1) mit einer ersten Konzentration an Teilchen in eine filtrierte Flüssigkeit (2) mit einer zweiten, höheren Konzentration an Teilchen und ein Permeat (3), und diese Vorrichtung umfasst ein zylindrisches Gehäuse (4', 4") und ein zylindrisches Filterelement (5), das in Achsenrichtung in besagtem Gehäuse (4', 4") aufgenommen ist und das an einer ersten Endfläche (6) zum in Achsenrichtung Einlassen der zu filtrierenden Flüssigkeit (1) eingerichtet ist und an einer gegenüberliegenden zweiten Endfläche (7) zum in Achsenrichtung Auslassen der filtrierten Flüssigkeit (2) eingerichtet ist, und dieses Filterelement (5) ist weiter mit Auslassmitteln (21) für das Permeat (3) versehen, wobei das Gehäuse (4', 4") mit Einlassmitteln (8, 16) zum Einlassen der zu filtrierenden Flüssigkeit (1) und Auslassmitteln (9, 13) zum Auslassen der filtrierten Flüssigkeit (2) und des Permeats (3) versehen ist, wobei das Gehäuse (4', 4") eingerichtet ist, um die filtrierte Flüssigkeit (2) in einen Auslassraum (11) zwischen dem Filterelement (5) und dem Gehäuse (4', 4") in einer Richtung entgegengesetzt zur Richtung der zu filtrierenden Flüssigkeit (1) durch das Filterelement zu leiten, wobei
die Einlassmittel eine Einlasskammer (16), von der ein Wandteil zumindest teilweise von der ersten Endfläche (6) des Filterelements (5) gebildet wird, sowie eine in die Kammer (16) einmündende Einlassleitung (8) umfassen,
die zweite Endfläche (7) in offener Verbindung mit einem sich zumindest zwischen der Außenfläche des Filterelements (5) und dem Gehäuse (4', 4") erstreckenden Auslassraum (11) steht, und
die Auslassmittel eine in Bezug auf die zweite Endfläche (7) distal angebrachte Auslassöffnung (13) in dem Auslassraum (11) umfassen, **dadurch gekennzeichnet, dass** die Einlasskammer (16) frei von der Zylinderfläche und den Endflächen des Gehäuses (4', 4") angebracht ist.

2. Filtervorrichtung (20, 30, 40, 50) nach Anspruch 1, **dadurch gekennzeichnet, dass** die Einlasskammer eine zylindrische Kammer (16) umfasst.

3. Filtervorrichtung (20, 30, 40, 50) nach einem der Ansprüche 1-2, **dadurch gekennzeichnet, dass** das Gehäuse (4', 4") aus einem Behälterteil (4'), an welches das Filterelement (5) trennbar gekoppelt ist und von welchem sich eine Einlassleitung (8) für zu filtrierende Flüssigkeit (1) und eine Auslassleitung (9) für filtrierte Flüssigkeit (2) erstrecken, und einem Deckelteil (4"), welches trennbar an das Behälterteil gekoppelt werden kann, zusammengesetzt ist.

4. Filtervorrichtung (30, 40) nach Anspruch 3, **dadurch gekennzeichnet, dass** das Deckelteil (4") mit Griffen (25) versehen ist.

5. Filtervorrichtung (30) nach einem der obigen Ansprüche, **dadurch gekennzeichnet, dass** das Gehäuse (4', 4") vertikal gestellt werden kann und sich im Betriebszustand eine Einlassleitung (8) für zu filtrierende Flüssigkeit (1) und eine Auslassleitung (9) für filtrierte Flüssigkeit (2) von der Außenfläche des Gehäuses (4', 4") aus auf einer Höhe nahe der Unterseite (27) erstrecken.

6. Filtervorrichtung (20, 30, 40) nach einem der obigen Ansprüche, **dadurch gekennzeichnet, dass** die Auslassmittel eine sich von der Auslassöffnung (13) aus erstreckende Auslassleitung (9) umfassen, wobei sich besagte Auslassleitung (9) und die Einlassleitung (8) durch dieselbe Endfläche des Gehäuses (4', 4") erstrecken.

7. Filtervorrichtung (20, 40) nach Anspruch 6, **dadurch gekennzeichnet, dass** das Gehäuse (4', 4") vertikal gestellt werden kann und sich im Betriebszustand eine Einlassleitung (8) für zu filtrierende Flüssigkeit (1) und eine Auslassleitung (9) für filtrierte Flüssigkeit (2) von der Unterseite (27) des Gehäuses (4', 4") aus erstrecken.

8. Filtervorrichtung (50) nach einem der Ansprüche 1-5, **dadurch gekennzeichnet, dass** das Gehäuse (4', 4") vertikal gestellt werden kann, sich im Betriebszustand eine Einlassleitung (8) für zu filtrierende Flüssigkeit (1) von der Unterseite (27) des Gehäuses (4', 4") aus erstreckt und sich eine Auslassleitung (9) für filtrierte Flüssigkeit (2) von der Außenfläche des Gehäuses (4', 4") aus erstreckt.

9. Filtervorrichtung (50) nach einem der obigen Ansprüche, wobei das Gehäuse (4', 4") vertikal gestellt werden kann, **dadurch gekennzeichnet, dass** die Unterseite (27', 27") des Gehäuses (4', 4") aus einer Trägerplatte besteht, welche sich bis zu einer Position außerhalb der Peripherie des Gehäuses (4', 4") erstreckt und welche die Unterseite des Gehäuses (4', 4") von zumindest einer zweiten Filtervorrichtung (50') nach einem der obigen Ansprüche bildet.

## Revendications

1. Dispositif de filtre (20, 30, 40, 50) pour séparer un liquide à filtrer (1) présentant une première concentration en particules en un liquide filtré (2) présentant une deuxième concentration en particules, plus élevée, et un perméat (3), comprenant un boîtier cylindrique (4', 4") et un élément de filtre cylindrique (5) qui est reçu dans la direction axiale dans ledit boîtier (4', 4") et qui est adapté à une première surface d'extrémité (6) pour laisser entrer le liquide à filtrer (1) dans la direction axiale, et qui est adapté à une deuxième surface d'extrémité opposée (7) pour décharger le liquide filtré (2) dans la direction axiale, l'élément de filtre (5) comprenant en outre des moyens de sortie (21) pour le perméat (3), dans lequel le boîtier (4', 4") comprend des moyens d'entrée (8, 16) pour laisser entrer le liquide à filtrer (1), et des moyens de sortie (9, 13) pour décharger le liquide filtré (2) et le perméat (3), le boîtier (4', 4") étant adapté pour guider le liquide filtré (2) dans un espace de sortie (11) entre l'élément de filtre (5) et le boîtier (4', 4") dans une direction opposée à la direction du liquide à filtrer (1) à travers l'élément de filtre, dans lequel:
les moyens d'entrée comprennent une chambre d'entrée (16), dont une partie de paroi est au moins partiellement formée par la première surface d'extrémité (6) de l'élément de filtre (5), en plus d'un conduit d'entrée (8) qui débouche dans cette chambre (16),
la deuxième surface d'extrémité (7) est en communication ouverte avec un espace de sortie (11) qui s'étend au moins entre la surface extérieure de l'élément de filtre (5) et le boîtier (4', 4"), et
les moyens de sortie comprennent une ouverture de sortie (13) dans l'espace de sortie (11) placée à distance de la deuxième surface d'extrémité (7), **caractérisé en ce que** la chambre d'entrée (16) est agencée sans la surface de cylindre et des surfaces d'extrémité du boîtier (4', 4").

2. Dispositif de filtre (20, 30, 40, 50) selon la revendication 1, **caractérisé en ce que** la chambre d'entrée comprend une chambre cylindrique (16).

3. Dispositif de filtre (20, 30, 40, 50) selon l'une quelconque des revendications 1 et 2, **caractérisé en ce que** le boîtier (4', 4") est assemblé à partir d'une partie de support (4') à laquelle l'élément de filtre (5) est couplé de façon détachable et à partir de laquelle s'étendent un conduit d'entrée (8) pour le liquide à filtrer (1) et un conduit de sortie (9) pour le liquide filtré (2), et une partie de couvercle (4") qui peut être couplée de façon détachable à la partie de support.

4. Dispositif de filtre (30, 40) selon la revendication 3, **caractérisé en ce que** la partie de couvercle (4") comporte des poignées (25).

5. Dispositif de filtre (30) selon l'une quelconque des revendications précédentes, **caractérisé en ce que** le boîtier (4', 4") peut être placé verticalement, et un conduit d'entrée (8) pour le liquide à filtrer (1) et un conduit de sortie (9) pour le liquide filtré (2) s'étendent dans la situation de fonctionnement à partir de la surface extérieure du boîtier (4', 4") à une hauteur proche de la face inférieure (27).

6. Dispositif de filtre (20, 30, 40) selon l'une quelconque des revendications précédentes, **caractérisé en ce que** les moyens de sortie comprennent un conduit de sortie (9) qui s'étend à partir de l'ouverture de sortie (13), dans lequel le conduit de sortie (9) et le conduit d'entrée (8) s'étendent à travers la même surface d'extrémité du boîtier (4', 4").

7. Dispositif de filtre (20, 40) selon la revendication 6, **caractérisé en ce que** le boîtier (4', 4") peut être placé verticalement, et un conduit d'entrée (8) pour le liquide à filtrer (1) et un conduit de sortie (9) pour le liquide filtré s'étendent dans la situation de fonctionnement à partir de la face inférieure (27) du boîtier (4', 4").

8. Dispositif de filtre (50) selon l'une quelconque des revendications 1 à 5, **caractérisé en ce que** le boîtier (4', 4") peut être placé verticalement, un conduit d'entrée (8) pour le liquide à filtrer (1) s'étend dans la situation opérationnelle à partir de la face inférieure (27) du boîtier (4', 4"), et un conduit de sortie (9) pour le liquide filtré (2) s'étend à partir de la surface extérieure du boîtier (4', 4").

9. Dispositif de filtre (50) selon l'une quelconque des revendications précédentes, dans lequel le boîtier (4', 4") peut être placé verticalement, **caractérisé en ce que** la face inférieure (27', 27") du boîtier (4', 4") est formée par une plaque de support qui s'étend jusqu'à une position située à l'extérieur de la périphérie du boîtier (4', 4") et qui forme la face inférieure du boîtier (4', 4") d'au moins un deuxième dispositif de filtre (50') selon l'une quelconque des revendications précédentes.
